# EUROPÄISCHE PATENTSCHRIFT

(11) **EP 0 456 335 B1**
(45) Veröffentlichungstag und Bekanntmachung des Hinweises auf die Patenterteilung: **13.09.1995**
(21) Anmeldenummer: 91250098.0
(22) Anmeldetag: 11.04.1991
(51) Int. Cl.: B29C 45/64

(54) **Vorrichtung zum Schliessen von Formen einer Spritzgiessmaschine**
Mould closing device of an injection moulding machine
Dispositif pour fermer les moules d'une machine à mouler par injection

(30) Priorität: 07.05.1990 DE 4014905
(43) Veröffentlichungstag der Anmeldung: 13.11.1991
(73) Patentinhaber: MANNESMANN Aktiengesellschaft, 40027 Düsseldorf (DE)
(72) Erfinder: Würl, Ernst, W-8831 Höttingen (DE)
(74) Vertreter: Meissner, Peter E., Dipl.-Ing.

(56) Entgegenhaltungen:
- EP-A- 0 164 419
- WO-A-90/02033
- DE-A- 2 802 434
- DE-A- 2 909 738
- DE-B- 2 019 919
- US-A- 3 452 399

## Beschreibung

Die Erfindung betrifft eine Vorrichtung zum Schließen von Formen einer Spritzgießmaschine für Kunststoff gemäß den Merkmalen im Oberbegriff von Anspruch 1.

Eine derartige Vorrichtung ist aus der WO-A-90 02 033 bekannt.

Beim Spritzgießen von Kunststoff werden Formwerkzeughälften in den Taktpausen zwischen dem Gießen und dem Auswerfen des gegossenen Artikels aufeinander zu- bzw. wegbewegt. Hierzu wird eine bewegbare formaufspannplatte auf Holmen verschoben. Diese bewegbare Aufspannplatte kann durch Antriebseinheiten unmittelbar oder durch einen Kniehebelmechanismus betätigt werden.

Nachteil einer ausschließlich hydraulischen Ausführungsform ist es, daß insgesamt eine oder mehrere für relativ hohe Drücke ausgelegte Kolben-Zylinder-Einheiten erforderlich sind. Darüber hinaus muß bei dieser vollhydraulischen Maschine der Hydraulikdruck beim Zuhalten der Maschine aufrechterhalten werden.

Aus EP-PS 01 64 419 ist eine Schließvorrichtung zum Schließen von Formen einer Spritzgießeinrichtung bekannt, bei der ein Gelenkmechanismus von einer durch einen Servomotor angetriebene Spindelmutter bewegbar ist. Nachteil dieser Ausführung ist das weite Auskragen des Antriebsmotors wie auch der Spindelmutter in sämtlichen in der Schrift beschriebenen Ausführungsformen. Auffällig ist auch die Behinderung des Raums zwischen Endplatte und bewegbarer Aufspannplatte gerade bei der nichtzentrischen Anordnung.

Aus der DE-PS 29 09 738 ist eine Formschließvorrichtung an Spritzgießmaschinen zum Spritzprägen von Kunststoffteilen bekannt, bei der ein zentral angeordneter Zylinder einer Kolben-Zylinder-Einheit an seinem Ende einen Anschlag aufweist, der entsprechend dem Prägehub verstellbar ist. Die aus dieser Schrift bekannte Spritzgießmaschine weist ein großes Bauvolumen auf, hervorgerufen durch den aus der Maschine herausragenden Zylinder plus der Einstellvorrichtung. Durch die zentrische Anordnung der Kolben-Zylinder-Einheit wird darüber hinaus der Raum zwischen der Endplatte und der beweglichen Formaufspannplatte im Zentrum ausgefüllt.

Aus der DE 28 02 434 A1 ist eine Formmaschine mit einem Verriegelungsmechanismus bekannt, der Doppelkniehebel aufweist und bei dem ein Querkopf in der Weise zwischen zwei Formaufspannplatten beweglich ist, daß ein vorderes und hinteres Gestänge in Druckstellung gebracht wird. Dabei ist für den Verriegelungsmechanismus eine Antriebseinheit für den Kniehebel und zusätzlich eine für den Verriegelungszylinder vorgesehen.

Aufgabe der Erfindung ist es, eine Formschließeinheit zu finden, die mit einfachen Mitteln den erforderlichen Aufstellraum einer gattungsgemäßen Spritzgießmaschine verkleinert und im Bereich der der Endplatte zugewandten Seite der Aufspannplatte einen weitgehend ungehinderten Montageraum ermöglicht.

Die Aufgabe der Erfindung wird gelöst durch die Merkmale des Anspruchs 1. Bei der erfindungsgemäßen Vorrichtung zum Schließen von Formen einer Spritzgießmaschine für Kunststoff werden mindestens zwei Antriebseinheiten eingesetzt. Durch die Verwendung von Doppelkniehebeln kommen hierbei Antriebe für ein relativ geringes Druckniveau mit geringen Außenabmessungen zum Einsatz. Durch die Anordnung solcher Antriebe zwischen der Endplatte und der beweglichen Formspannplatte ragen keine Antriebsteile über die Hauptelemente der Spritzgießmaschine hinaus. Wertvoller Hallenraum wird nicht vergeudet, die Antriebsteile sind durch ihre geschützte Unterbringung nicht mehr so stark möglicher Beschädigungen durch beispielsweise Kranarbeit gefährdet. Durch den Wegfall von Stoß- und Stolperkanten wird die Arbeitssicherheit erhöht.

Durch die Anordnung von mindestens zwei Antrieben besteht die Möglichkeit, den Bereich um die Maschinenhauptachse von störenden Maschinenelementen freizuhalten. Dieser freie zentrale Raum läßt sich für Montage-, Meß- und Regel- sowie Überwachungszwecke nutzen.

Als Antriebseinheit werden hydraulische Kolben-Zylinder-Einheiten, und zwar sowohl als Differential- wie auch als Gleichgangzylinder eingesetzt.

Beim Einsatz von Gleichgangzylindern kann man sich den Vorteil zu Nutze machen, daß ausschließlich ein konstantes Ölvolumen sowohl bei der Schließ- wie Öffnungsphase zu bewegen ist. In vorteilhafter Weise können Servo-Gleichgang-Zylinder eingesetzt werden. Darüber hinaus wird durch eine beidendige Fixierung der Kolbenstange des Gleichgangzylinders der Doppelkniehebel geführt.

In einer anderen Ausführungsform wird vorgeschlagen, den Zylinder der Kolben-Zylinder-Einheit als Lauffläche auszugestalten und zu führen. Es wird in einer dritten Ausführungsform vorgeschlagen, Holmen als Führungselemente zu nutzen. Die genannten Führungsarten verleihen der kompakt aufgebauten Spritzgießmaschine eine hohe Steifigkeit.

Der Freiraum im Zentrum der Spritzgießmaschine wird weiter vergrößert durch einen in Rahmenkonstruktion ausgestalteten Kreuzkopf. Diese leichte und in angepaßter Konstruktion verwindungssteife Bauart des Kreuzkopfes ermöglicht zusammen mit einer der o. g. Führungsarten eine exakte störungsfreie Einleitung der Kräfte von den Antrieben zu den Doppelkniehebeln.

Ohne Einengung des Freiraums und ohne Vergrößerung der Außenabmessung der Spritzgießmaschine können am Fuße der Antriebe mechanische Anschläge angeordnet werden. Hiermit läßt sich das Kniehebelsystem feinsteinstellen. Darüber hinaus können auch an den Anschlägen Dämpfer angebracht werden, die Stoßkräfte minimieren. Durch diese Maßnahmen wird ohne Einschränkung der Bedienungs- und Wartungsfreundlichkeit durch den geschaffenen Freiraum die Standzeit einzelner Elemente der Spritzgießmaschine positiv beeinflußt.

Ausführungsbeispiele der erfindungsgemäßen Maschine sind in den folgenden Zeichnungen dargelegt. Es zeigt:
- Fig. 1: den schematischen Aufbau
- Fig. 2: die Seitenansicht einer Spritzgießmaschine und
- Fig. 3: einen horizontalen Schnitt in Höhe der Maschinenmittenachse in Draufsicht.

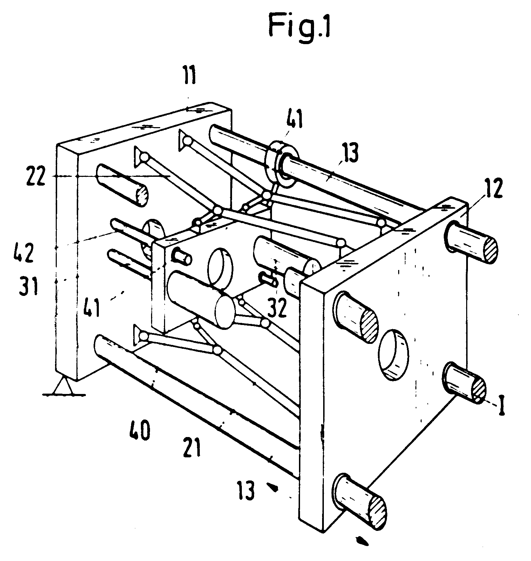

Die Figur 1 zeigt die feststehende Endplatte 11, an der Holme 13, Kniehebel 21, 22 sowie Antriebe 31, 32 befestigt sind. Die Antriebe 31, 32 wirken dabei auf einen Kreuzkopf 40, der mittels Kniehebel 21, 22 eine auf Holmen 13 gelagerten Formaufspannplatte bewegt. Der Kreuzkopf 40 weist Führungslager 41 auf, die entweder von den Holmen 13 oder auf mit der Endplatte 11 verbundenen Führungsstangen geführt werden.

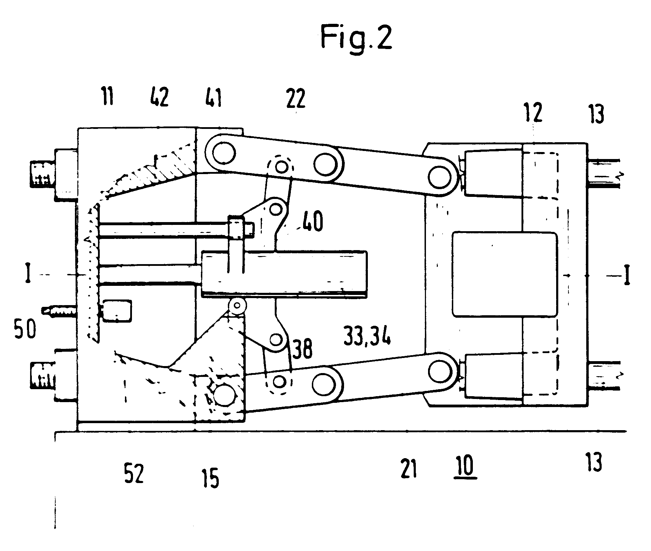

Die Figur 2 zeigt eine Seitenansicht der Spritzgießmaschine 10 mit der Endplatte 11 und der auf Holmen 13 geführten Formaufspannplatte 12. In Höhe der Maschinenhauptachse I ist als Antrieb eine Kolben-Zylinder-Einheit 33 vorhanden. In der vorliegenden Figur 2 ist diese Kolben-Zylinder-Einheit 33 als Differentialzylinder 34 ausgebildet. Die Kniehebel 21, 22 sind mit der Endplatte 11, der Formaufspannplatte 12 und dem Kreuzkopf 40 gelenkig verbunden.

Im oberen Bereich der Figur 2 weist der Kreuzkopf 40 ein Führungslager 41 auf, durch das eine an der Endplatte 11 befestigte Führungsstange 42 geführt wird.

Im unteren Bereich der Figur 2 ist am Zylinder des Differentialzylinders 34 eine Lauffläche 38 vorgesehen, die an einer Führungseinheit 15 zur lateralen Bewegung der Kolben-Zylinder-Einheit 33 gelagert ist.

An der Endplatte 11 ist parallel zur Maschinenhauptachse I ein mechanisch verstellbarer und mit einem Stoßdämpfer 52 versehener Anschlag 50 angeordnet.

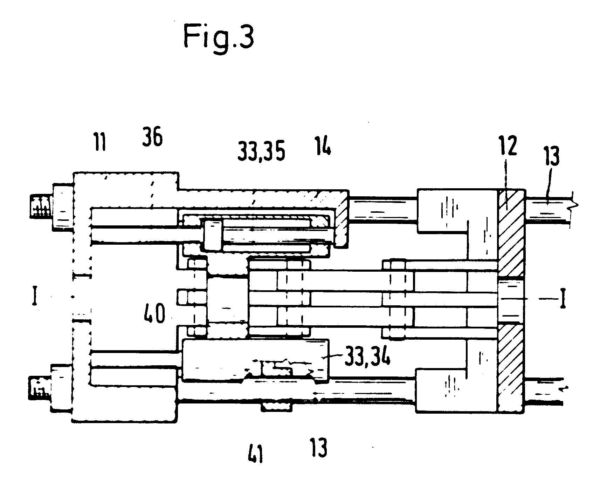

Im horizontalen Schnitt der Draufsicht der Figur 3 ist im unteren Bereich in der Figur 2 eine als Differentialzylinder 34 ausgebildete Kolben-Zylinder-Einheit 33 dargestellt. Der Kreuzkopf 40 weist hier ein Führungslager 41 auf, das von den die Endplatte 11 und die Formaufspannplatte 12 verbindenden Holmen 13 geführt wird.

Im oberen Bereich der Figur 3 ist die Kolben-Zylinder-Einheit 33 als Gleichgangzylinder 35 ausgebildet. Die Kolbenstange 36 des Gleichgangzylinders 35 ist einends am Hauptkörper der Endplatte 11 und anderenends an einem Gehäuseteil 14 der Endplatte 11 befestigt.

## Patentansprüche

1. Vorrichtung zum Schließen von Formen einer Spritzgießmaschine für Kunststoff mit einer feststehenden Endplatte (11), die über einen Doppelkniehebel (21, 22) aufweisenden Kniehebelmechanismus mit einer auf Holmen (13) verfahrbaren Formaufspannplatte (12) verbunden ist, wobei die zwischen der Endplatte (11) und der Formaufspannplatte (12) parallel zur Maschinenhauptachse angeordneten Doppelkniehebel (21, 22) durch an der Endplatte (11) befestigte Antriebseinheiten (31, 32) betätigbar sind,
dadurch gekennzeichnet,
daß die Antriebseinheiten (31, 32) hydraulische Kolben-Zylinder-Einheiten (33) sind, die durch einen einzigen Kreuzkopf (40) formschlüssig mit den Doppelkniehebeln (21, 22) verbunden sind.

2. Vorrichtung nach Anspruch 1,
dadurch gekennzeichnet,
daß der Kreuzkopf (40) als Rahmenkonstruktion ausgeführt ist.

3. Vorrichtung nach Anspruch 2,
dadurch gekennzeichnet,
daß am Kreuzkopf (40) parallel zur Maschinenhauptachse (I) angeordnete Führungslager (41) vorgesehen sind.

4. Vorrichtung nach Anspruch 3,
dadurch gekennzeichnet,
daß die Führungslager (41) auf an der Endplatte (11) befestigten Führungsstangen (42) verschiebbar gelagert sind.

5. Vorrichtung nach Anspruch 3,
dadurch gekennzeichnet,
daß die Führungslager (41) auf mindestens zwei Holmen (13) verschiebbar gelagert sind.

6. Vorrichtung nach Anspruch 1,
dadurch gekennzeichnet,
daß die Kolben-Zylinder-Einheiten (33) Differentialzylinder (34) aufweisen.

7. Vorrichtung nach Anspruch 6,
dadurch gekennzeichnet,
daß am Zylinder der Kolben-Zylinder-Einheiten (33) Laufflächen (38) vorgesehen sind.

8. Vorrichtung nach Anspruch 7,
dadurch gekennzeichnet,
daß die Endplatte (11) ein als Führung ausgebildetes Gehäuseteil (15) aufweist, in der die Laufflächen (38) gelagert sind.

9. Vorrichtung nach Anspruch 1,
dadurch gekennzeichnet,
daß die Kolben-Zylinder-Einheiten (33) Gleichgangzylinder (35) aufweisen.

10. Vorrichtung nach Anspruch 9,
dadurch gekennzeichnet,
daß die Kolbenstangen (36) des Gleichgangzylinders (35) beidendig am Gehäuseteil (14) der Endplatte (11) fixiert sind.

11. Vorrichtung nach einem der vorhergehenden Ansprüche,
dadurch gekennzeichnet,
daß an der Endplatte (11) ein mechanischer Anschlag (50) vorgesehen ist.

12. Vorrichtung nach Anspruch 11,
dadurch gekennzeichnet,
daß am Anschlag (50) ein Stoßdämpfer (52) angeordnet ist.

13. Vorrichtung nach Anspruch 11 oder 12,
dadurch gekennzeichnet,
daß der Anschlag (50) eine zentrale Verstellung (51) aufweist.

## Claims

1. Device for closing moulds of an injection moulding machine for plastic, with a stationary end plate (11) which is connected via a toggle mechanism comprising toggle joints (21, 22) to a mould mounting plate (12) which can move on bars (13), wherein the toggle joints (21, 22), which are arranged between the end plate (11) and the mould mounting plate (12) parallel to the principal machine axis, can be actuated by drive units (31, 32) secured to the end plate (11), characterised in that the drive units (31, 32) are hydraulic piston-cylinder units (33) which are positively connected to the toggle joints (21, 22) by a single crosshead (40).

2. Device according to claim 1, characterised in that the crosshead (40) is formed as a frame construction.

3. Device according to claim 2, characterised in that guide bearings (41), which are arranged parallel to the principal machine axis (I), are provided on the crosshead (40).

4. Device according to claim 3, characterised in that the guide bearings (41) are mounted in a displaceable manner on guide rods (42) secured to the end plate (11).

5. Device according to claim 3, characterised in that the guide bearings (41) are mounted in a displaceable manner on at least two bars (13).

6. Device according to claim 1, characterised in that the piston-cylinder units (33) comprise differential cylinders (34).

7. Device according to claim 6, characterised in that bearing surfaces (38) are provided on the cylinder of the piston-cylinder units (33).

8. Device according to claim 7, characterised in that the end plate (11) comprises a housing part (15) which is formed as a guide and in which the bearing surfaces (38) are mounted.

9. Device according to claim 1, characterised in that the piston-cylinder units (33) comprise synchronous cylinders (35).

10. Device according to claim 9, characterised in that the piston rods (36) of the synchronous cylinder (35) are fixed at both ends to the housing part (14) of the end plate (11).

11. Device according to one of the preceding claims, characterised in that a mechanical stop (50) is provided on the end plate (11).

12. Device according to claim 11, characterised in that a shock absorber (52) is arranged on the stop (50).

13. Device according to claim 11 or 12, characterised in that the stop (50) comprises a central adjustment (51).

## Revendications

1. Dispositif pour fermer les moules d'une machine de moulage par injection pour de la matière synthétique, comportant une plaque d'extrémité fixe (11), qui est reliée, par l'intermédiaire d'un mécanisme à leviers coudés présentant des leviers coudés doubles (21,22), à une plaque de serrage de moule (2) déplaçable sur des longerons (13), les leviers coudés doubles (21,22) agencés entra la plaque d'extrémité (11) et la plaque de serrage de moule (12) parallèlement à l'axe principal de la machine pouvant être actionnés par des unités d'entraînement (31,32) fixées à la plaque d'extrémité (11),
caractérisé on ce que les unités d'entraînement (31,32) sont des vérins hydrauliques (33) qui sont reliés mécaniquement aux leviers coudés doubles (21,22) par une tête de piston unique (40).

2. Dispositif selon le revendication 1,
caractérisé en ce que la tête de piston (40) est réalisée comme construction de bâti.

3. Dispositif selon la revendication 2,
caractérisé en ce que des paliers de guidage (41) agencés parallèlement à l'axe principal de la machine (I) sont prévus sur la tête de piston (40).

4. Dispositif selon la revendication 3,
caractérisé en ce que les paliers de guidage (41) sont montés de façon déplaçable sur des barres de guidage (42) fixées à la plaque d'extrémité (11).

5. Dispositif selon la revendication 3,
caractérisé en ce que les paliers de guidage (41) sont montés de façon déplaçable sur au moins deux longerons (13).

6. Dispositif selon la revendication 1,
caractérisé en ce que les vérins (33) présentent des cylindres différentiels (34).

7. Dispositif selon la revendication 6,
caractérisé en ce que des surfaces de roulement (38) sont prévues sur le cylindre des vérins (33).

8. Dispositif selon la revendication 7,
caractérisé en ce que la plaque d'extrémité (11) présente une partie de carter (15) réalisée comme guide, dans laquelle sont prévues les surfaces de roulement (38).

9. Dispositif selon la revendication 7,
caractérisé en ce que les vérins (33) présentent des cylindres d'allure identique (35).

10. Dispositif selon la revendication 9,
caractérisé en ce que les tiges de piston (36) des cylindres (35) sont fixées, aux deux extrémités, à la partie de carter (14) de la plaque d'extrémité (11).

11. Dispositif selon une des revendications précédentes,
caractérisé en ce qu'une butée mécanique (50) est prévue sur la plaque d'extrémité (11).

12. Dispositif selon la revendication 11,
caractérisé en ce qu'un amortisseur de chocs (52) est agencé sur la butée (50).

13. Dispositif selon la revendication 11 ou 12,
caractérisé en ce que la butée (50) présente un réglage central (51).
